Europäisches Patentamt

European Patent Office

Office européen des brevets

(11) Numéro de publication: **0 545 222 A1**

# DEMANDE DE BREVET EUROPEEN

(21) Numéro de dépôt: **92119971.7**

(22) Date de dépôt: **24.11.92**

(51) Int. Cl.⁵: **H02P 5/40**

(30) Priorité: **29.11.91 FR 9114806**

(43) Date de publication de la demande:
**09.06.93 Bulletin 93/23**

(84) Etats contractants désignés:
**AT BE CH DE ES FR GB IT LI NL SE**

(71) Demandeur: **GEC ALSTHOM SA**
**38, avenue Kléber**
**F-75116 Paris(FR)**

(72) Inventeur: **Wei, Liming**
**173/2, Rue Anatole France**
**F-69100 Villeurbanne(FR)**

(74) Mandataire: **Weinmiller, Jürgen et al**
**Lennéstrasse 9 Postfach 24**
**W-8133 Feldafing (DE)**

(54) **Dispositif de contrôle de couple d'un moteur électrique asynchrone.**

(57) Ce dispositif de contrôle de couple d'un moteur électrique asynchrone, par contrôle de la phase de la tension statorique de ce moteur par rapportà un flux de ce moteur, est tel que, ledit contrôle étant effectué à partir d'une consigne constituée par la consigne Isqcons de composante, dite en quadrature, du courant statorique, dans un repère lié audit flux, obtenue elle-même à partir de la consigne de couple de ce moteur, il comporte:
- des moyens (5) de détection d'écart entre ladite consigne Isqcons et la valeur en cours pour ladite composante en quadrature,
- des moyens de régulation (7), opérant à partir de l'écart ainsi détecté, pour fournir la valeur de phase à appliquer à ce moteur, de façon à réduire cet écart.

FIG.1

EP 0 545 222 A1

La présente invention concerne le contrôle de couple d'un moteur électrique asynchrone.

L'alimentation du stator d'un moteur électrique asynchrone s'effectuant généralement au moyen d'un élément appelé onduleur de tension, il est connu, pour effectuer un tel contrôle, d'agir, dans le cadre d'un contrôle dit scalaire, sur la fréquence et sur l'amplitude de la tension statorique de ce moteur.

On sait en outre que le contrôle du module de la tension statorique est, à fréquence constante, équivalent à un contrôle du flux rotorique du moteur, et que le contrôle de la fréquence statorique est, à flux rotorique constant, équivalent à un contrôle de la composante, dite en quadrature, du courant statorique du moteur dans un repère lié au flux rotorique.

Il est par ailleurs connu d'utiliser, au lieu d'un contrôle de la fréquence statorique, un contrôle de la phase de la tension statorique par rapport au flux rotorique, ce qui permet d'obtenir une réponse plus rapide pour ledit contrôle, qui prend alors le nom de contrôle vectoriel.

Un tel système de contrôle vectoriel est décrit notamment dans la demande de brevet français n° 8903685.

Suivant ce système, une grandeur dite grandeur de consigne de phase de la tension statorique par rapport au flux rotorique, notée $\alpha$ cons, est obtenue à partir de composantes régulées de la tension statorique, notées Ud et Uq, et correspondant respectivement aux composantes, dites en phase et en quadrature, de cette tension statorique dans un repère lié au flux rotorique.

Ces composantes régulées Ud et Uq sont issues respectivement de deux régulateurs recevant respectivement la consigne de flux rotorique, notée $\phi$rcons, et la consigne de composante en quadrature du courant statorique, notée Iqcons, ces deux consignes $\phi$rcons et Iqcons étant elles-mêmes élaborées à partir de la consigne de couple du moteur.

Cette consigne de phase ainsi obtenue est ensuite comparée à la valeur de phase en cours, et, en cas d'écart, la fréquence statorique en cours est corrigée de façon à réduire cet écart.

Les composantes régulées Ud et Uq issues de ces deux régulateurs sont en outre utilisées pour fournir le module de tension statorique à appliquer, de même que la fréquence statorique ainsi corrigée, à l'onduleur de tension, par l'intermédiaire d'un élément appelé généralement modulateur de largeur d'impulsions, pour obtenir la consigne de couple souhaitée pour ce moteur.

Ce système de contrôle vectoriel est ainsi limité au cas où ladite régulation de phase s'accompagne d'une régulation de module, c'est-à-dire aux cas de fonctionnement du moteur à basse vitesse, puisqu'on sait par ailleurs qu'une telle régulation de module, c'est-à-dire de flux, ne peut être mise en oeuvre à haute vitesse, lorsque l'onduleur fonctionne en saturation (ce qui peut être le cas à cause du temps de conduction minimum des composants de puissance de cet onduleur, ou dans un régime de fonctionnement de cet onduleur dit en pleine onde).

La présente invention a pour objet un système de contrôle vectoriel excluant une telle limitation et pouvant ainsi être utilisé aussi bien pour un fonctionnement à basse vitesse que pour un fonctionnement à haute vitesse.

La présente invention a pour objet un dispositif de contrôle de couple d'un moteur électrique asynchrone, par contrôle de la phase de la tension statorique de ce moteur par rapport à un flux de ce moteur, essentiellement caractérisé en ce que, ledit contrôle étant effectué à partir d'une consigne constituée par la consigne Isqcons de composante, dite en quadrature, du courant statorique, dans un repère lié audit flux, obtenue elle-même à partir de la consigne de couple de ce moteur, ce dispositif comporte:

- des moyens de détection d'écart entre ladite consigne Isqcons et la valeur en cours pour ladite composante en quadrature, et
- des moyens de régulation, dits premiers moyens de régulation, opérant à partir de l'écart ainsi détecté, pour fournir la valeur de phase à appliquer à ce moteur, de façon à réduire cet écart.

D'autres objets et caractéristiques de la présente invention apparaîtront à la lecture de la description suivante d'un exemple de réalisation, faite en relation avec les dessins ci-annexés dans lesquels :

- la figure 1 est un schéma d'un exemple de réalisation d'un dispositif de contrôle de couple suivant l'invention,
- la figure 2 est un diagramme vectoriel représentant diverses grandeurs ou paramètres intervenant dans le fonctionnement d'un tel dispositif.

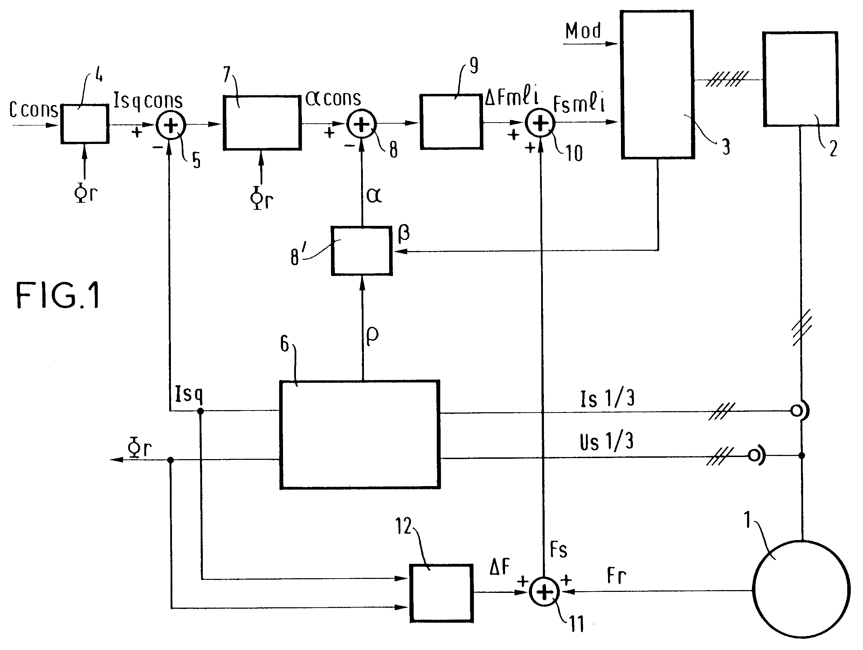

Sur la figure 1 est représenté schématiquement un moteur, 1, commandé par un onduleur de tension, 2, lui-même commandé par un modulateur de largeur d'impulsions, 3, qui reçoit deux grandeurs notées Mod et Fsmli représentant respectivement le module et la fréquence de la tension statorique à appliquer au 1 moteur par l'intermédiaire des éléments 2 et 3.

L'invention s'appliquant aussi bien aux cas de fonctionnement à haute vitesse qu'aux cas de fonctionnement à basse vitesse, la grandeur Mod peut aussi bien être une valeur constante, qu'être régulée pour maintenir le flux dans le moteur constant à basse vitesse (cette régulation de la grandeur Mod pouvant en outre être faite suivant une méthode classique); c'est pourquoi le mode d'élaboration de cette grandeur n'est pas précisé sur cette figure.

Pour l'élaboration de la grandeur Fsmli, on élabore, dans un organe de calcul repéré 4, une consigne pour la composante Isq de courant statorique en quadrature, notée Isqcons, obtenue simplement à partir de la consigne de couple, notée Ccons, et du flux rotorique mesuré, noté $\phi$r, par application de la relation, déduite des équations de fonctionnement du moteur :

Ccons = Po. (Lm/Lr) $\phi$r. Isqcons

où Lm désigne l'inductance mutuelle cyclique entre stator et rotor du moteur, Po désigne le nombre de paires de pôles du moteur, et avec Tr = Lr/Rr où Lr désigne l'inductance cyclique du rotor et Rr la résistance du rotor par phase du moteur.

L'écart entre la grandeur de consigne Isqcons et la grandeur Isq en cours est évalué dans un détecteur d'écart 5, la grandeur Isq en cours étant obtenue en sortie d'un élément 6, appelé démodulateur et utilisé habituellement pour calculer les grandeurs $\phi$r et Isq à partir des valeurs de courant et de tension statorique mesurées sur le moteur, notées respectivement Is 1/3 et Us 1/3 pour chacune des phases du moteur, la grandeur $\phi$r ainsi obtenue étant en outre celle utilisé par l'organe de calcul 4.

L'écart obtenu en sortie du détecteur d'écart 5 est appliqué à un régulateur 7 qui détermine la phase, dite de consigne et notée $\alpha$ cons, de la tension statorique par rapport au flux rotorique, à appliquer au moteur de façon à réduire cet écart.

Le mécanisme de régulation mis en oeuvre par le régulateur 7, qui peut être de type classique, tend en effet à réduire cet écart, car il existe entre les grandeurs $\alpha$ et Isq une relation qui peut être obtenue de la façon suivante.

D'après les équations de fonctionnement du moteur, on a, en régime établi :

Vsd = Rs.Isd - $\sigma$. Ls. ws. Isq
Vsq = Rs. Isq + Ls/Lm. ws. $\phi$r

où:
- Vsd et Vsq désignent respectivement les composantes, directe et en quadrature, de la tension statorique dans un repère lié au flux rotorique,
- Isd et Isq désignent les composantes, directe et en quadrature, du courant statorique, dans ce même repère,
- Rs désigne la résistance du stator par phase du moteur,
- Ls désigne l'inductance cyclique du stator,
- ws désigne la pulsation statorique, avec ws = 2 $\pi$ Fs, où Fs désigne la fréquence statorique,
- $\sigma$ est un coefficient de dispersion, avec:

$\sigma$ = 1 - Lm$^2$/Ls.Lr

les grandeurs, $\phi$r, Lm, Lr étant celles définies précédemment.
On a en outre :

$$tg \; \alpha = \frac{Vsd}{Vsq}$$

D'où :

$$tg \; \alpha = \frac{Rs. \; Isd - \sigma.Ls. \; ws. \; Isq}{Rs.Isq + (Ls/Lm). \; ws. \; \phi r}$$

Pour une pulsation ws élevée, la chute ohmique est négligeable, d'où

3

$$tg \propto = \frac{-\sigma . Ls . ws . Isq}{(Ls/Lm) . ws . \phi r} = \frac{-\sigma . Lm . Isq}{\phi r}$$

D'où :

$$\propto = \frac{\pi}{2} + arctg \frac{\sigma Lm . Isq}{\phi r} \qquad (1)$$

Pour une tension d'alimentation donnée du moteur, le flux $\phi r$ étant constant, l'angle $\alpha$ s'exprime donc comme une fonction de Isq.

On notera en outre, au vu de la relation (1), que la grandeur $\phi r$ peut être utilisée pour modifier le gain du régulateur 7.

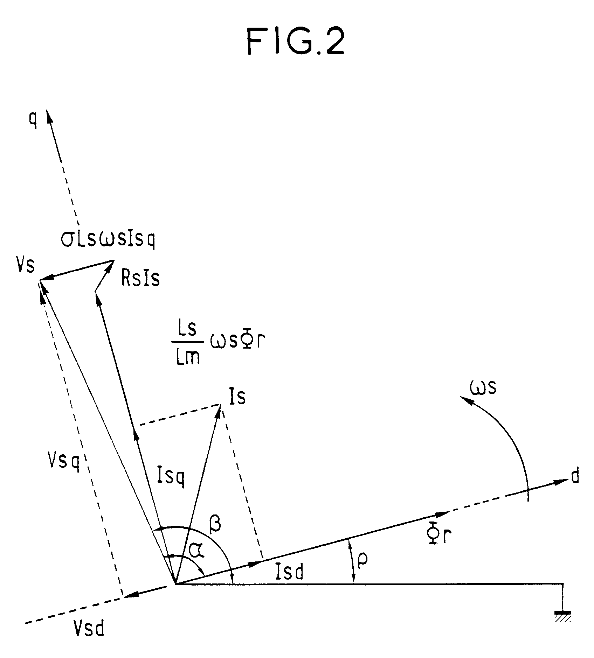

L'écart entre la grandeur $\alpha$ cons ainsi obtenue, et la grandeur $\alpha$ en cours, est évalué dans un détecteur d'écart 8, la grandeur $\alpha$ en cours étant obtenue par soustraction, à un angle $\beta$ représentant la position de la tension Vs dans un repère lié au stator, d'un angle $\rho$ représentant la position du flux $\phi r$ dans ce même repère, comme indiqué sur le diagramme de la figure 2, cette soustraction étant effectuée dans un soustracteur 8'.

Les angles $\beta$ et $\rho$ sont, de façon connue et non redécrite ici, délivrés respectivement par le modulateur de largeur d'impulsions 3et par le démodulateur 6.

L'écart obtenu en sortie du détecteur d'écart 8 est appliqué à un régulateur 9 qui détermine la correction, notée $\Delta$ Fsmli, à appliquer à la fréquence Fsmli en cours, pour réduire cet écart.

Ce régulateur 9 met également en oeuvre un mécanisme de régulation qui peut être classique et qui ne nécessite donc pas d'être redécrit.

La correction $\Delta$ Fsmli est ensuite ajoutée, dans un additionneur 10, à la fréquence statorique en cours, notée Fs, pour fournir la fréquence statorique Fsmli recherchée.

La fréquence Fs en cours est elle-même obtenue en sortie d'un additionneur 11 qui additionne la fréquence mesurée de rotation du rotor, fois P0 (P0 désignant le nombre de paires de pôles du moteur), notée Fr, au glissement, noté $\Delta$ F, de ce moteur, défini en effet par la relation :

$$\Delta F = Fs - Fr$$

Ce glissement $\Delta$ F est lui-même calculé à partir des grandeurs Isq et $\phi r$ issues du démodulateur 6, dans un organe de calcul 12 utilisant la relation suivante, déduite des équations de fonctionnement du moteur:

$$Lm. Isq = Tr. \Delta w. \phi r$$

avec $\Delta w = 2 \pi . \Delta F$
et les grandeurs Lm et Tr étant celles définies précédemment.

On notera que le mécanisme de régulation ainsi mis en oeuvre au moyen des éléments 8, 9 et 10 pourrait être remplacé par une simple conversion de la phase $\alpha$ cons, en une valeur de fréquence pour obtenir la grandeur Fsmli recherchée.

On notera également que, suivant la nature de l'élément tel que le modulateur de largeur d'impulsions, 3, utilisé pour la commande de l'onduleur de tension 2, la conversion de la phase $\alpha$ cons en fréquence Fsmli peut ne pas être nécessaire.

On notera également que bien que la description qui précède ait été faite plus particulièrement, à titre d'exemple, dans le cas où la référence pour la phase à réguler est constituée par le flux rotorique du moteur, il serait possible de prendre pour référence le flux statorique, ou le flux commun, de ce moteur.

## Revendications

1. Dispositif de contrôle de couple d'un moteur électrique asynchrone, par contrôle de la phase de la tension statorique de ce moteur par rapport à un flux de ce moteur, caractérisé en ce que, ledit contrôle étant effectué à partir d'une consigne constituée par la consigne Isqcons de composante, dite en quadrature, du courant statorique, dans un repère lié audit flux, obtenue elle-même à partir de la consigne de couple de ce moteur, ce dispositif comporte:

- des moyens (5) de détection d'écart entre ladite consigne Isqcons et la valeur en cours pour ladite composante en quadrature, dits premiers moyens de détection d'écart, et
- des moyens de régulation (7), dits premiers moyens de régulation, opérant à partir de l'écart ainsi détecté, pour fournir la valeur de phase, α cons, à appliquer à ce moteur, de façon à réduire cet écart.

2. Dispositif selon la revendication 1, caractérisé en ce qu'il comporte en outre:
- des moyens (8) de détection d'écart, entre la valeur de phase α cons fournie par lesdits premiers moyens de régulation (7), et la valeur en cours pour ladite phase, dits seconds moyens de détection d'écart, et
- des moyens de régulation (9), dits seconds moyens de régulation, opérant à partir de l'écart ainsi détecté par lesdits seconds moyens de détection d'écart pour fournir une correction de phase à appliquer au moteur pour réduire cet écart.

3. Dispositif selon la revendication 1, caractérisé en ce qu'il comporte en outre des moyens pour convertir ladite valeur de phase α cons en une valeur de fréquence, Fsmli, pour application au moteur.

4. Dispositif selon la revendication 2, caractérisé en ce qu'il comporte en outre des moyens pour convertir ladite correction de phase en une correction de fréquence, Δ Fsmli pour application au moteur.

FIG.1

# FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 388 845 (GEC ALSTHOM SA) <br> * le document en entier * <br> --- | 1-4 | H02P5/40 |
| Y | AUTOMATISIERUNGSTECHNISCHE PRAXIS <br> vol. 29, no. 2, 1987, MÜNCHEN <br> pages 83 - 88 <br> K.KLAUSECKER & AL. 'Eine neue Generation digital geregelter Drehstrom-Hauptspindelantriebe' <br> *paragraphe 5* <br> --- | 1-4 | |
| A | DE-A-3 820 125 (HITACHI,LTD.) <br> * page 11, ligne 21 -alinéa 41; figures 4,6 * <br> ----- | 1,2 | |

| | DOMAINES TECHNIQUES RECHERCHES (Int. Cl.5) |
|---|---|
| | H02P |

Le présent rapport a été établi pour toutes les revendications

| Lieu de la recherche | Date d'achèvement de la recherche | Examinateur |
|---|---|---|
| BERLIN | 10 MARS 1993 | LEOUFFRE M. |